# EUROPÄISCHE PATENTSCHRIFT

(11) **EP 2 093 102 B1**
(45) Veröffentlichungstag und Bekanntmachung des Hinweises auf die Patenterteilung: **25.01.2012**
(21) Anmeldenummer: 09001820.1
(22) Anmeldetag: 10.02.2009
(51) Int. Cl.: B60N 2/46

(54) **Schwenkbare Armlehne mit Kippentriegelung**
Swivelling armrest with swivel release
Accoudoir pivotant doté d'un déverrouillage de basculement

(30) Priorität: 20.02.2008 DE 102008010021
(43) Veröffentlichungstag der Anmeldung: 26.08.2009
(73) Patentinhaber: Daimler AG, 70327 Stuttgart (DE)
(72) Erfinder: Gaub, Martin, 89335 Ichenhausen-Oxenbronn (DE); Wachter, Gerhard, 89231 Neu-Ulm (DE)
(74) Vertreter: JENSEN & SON

(56) Entgegenhaltungen:
- WO-A1-99/39935
- DE-A1- 19 804 174
- US-A- 3 550 958

## Beschreibung

Die vorliegende Erfindung betrifft eine Armlehne mit einem Armauflageschenkel, einem Lagerschenkel, an dessen einem Ende der Armauflageschenkel befestigt ist, und einem Befestigungsschenkel, mit dem die Armlehne an einen Sitz montierbar ist.

Bei Armlehnen von Fahrer- bzw. Fahrgastsitzen in nahezu allen Arten von Fahrzeugen, wie Personenkraftwagen, Bussen, Flugzeugen etc., besteht häufig der Bedarf, dass die Armlehnen der Sitze aus einer Gebrauchsstellung in eine Nichtgebrauchsstellung bewegt werden. Dies ist insbesondere dazu notwendig, um den Sitz besser besteigen zu können.

Eine gattungsgemäße Armlehne ist aus der Druckschrift WO 99/39935 A1 sowie der Priorität gebenden DE 19804174 A1 bekannt. Ein dort beschriebener Sitz weist eine zwischen einer Gebrauchsstellung und einer Bereitschaftsstellung schwenkbar gelagerte Armlehne auf, welche einen Armauflageschenkel und einen mit diesem verbundenen Lagerschenkel aufweist. Der Lagerschenkel ist an seinem freien Ende an einer Schwenkachse seitlich am Sitz schwenkbar gelagert. Dazu sind zwei Kugelgelenklager vorgesehen, die zwei Enden einer Schwenkachse zugeordnet sind, wobei das erste, vordere Kugelgelenklager nahe benachbart zu einer Seitenverkleidung und das zweite, hintere Kugelgelenklager dem freien Ende der Schwenkachse zugeordnet ist. Oberhalb des hinteren Schwenklagers ist ein Federelement im Lagerschenkel gelagert. Dieses übt beim Verstellen des hinteren Kugelgelenklagers in vertikaler Richtung eine rückstellende Federkraft aus. Um das vordere Kugelgelenklager ist der Lagerschenkel verschwenkbar, wenn beispielsweise der Armauflageschenkel an seinem freien Ende nach oben angehoben wird.

Weiterhin ist aus der Patentschrift DE 25 09 642 C2 eine Armlehne für die den Mittelgang eines Omnibusses begrenzenden Sitze bekannt. Sie kann in Richtung zur vorderen Sitzkante aus einem seitlichen Rahmen herausgezogen werden und zwar soweit, bis ein Stift aus einer jeweiligen Nut in der hinteren Lagerung herausgetreten ist und dadurch die Armlehne um 180° nach außen zum Mittelgang verschwenkt werden kann. Um eine automatische Verriegelung der Gebrauchslage und der weggeschwenkten unteren Stellung beim Loslassen der Armlehne in den Endstellungen zu erreichen, ist auf dem in der Rückenlehne gelagerten Zapfenende eine auf Druck beanspruchte Schraubenfeder geführt. Sie wird mit ihrem der Sitzfläche zugekehrten Ende an der Rückenlehne des seitlichen Rahmens abgestützt. Das andere Ende der Schraubenfeder ist über eine Scheibe an dem das freie Zapfenende durchsetzenden Stift abgestützt.

Darüber hinaus offenbart die Gebrauchsmusterschrift DE 92 06 088 U1 eine Armlehne für einen Omnibussitz, die eine mit der Armauflage verbundene, an ihrem freien Ende verschwenkbar gelagerte Stütze umfasst, wobei die Schwenkachse durch die Lagerenden von Armauflage und Stütze verläuft. Um die Armlehne aus ihrer Gebrauchsstellung in ihre Bereitschaftsstellung zu verschwenken, wird die Armlehne entgegen der Wirkung einer Feder verschoben. Durch diese Verschiebung der Armlehne relativ zur Feder wird eine zugeordnete Arretiervorrichtung eingerastet bzw. ausgerastet. Die für das Verschwenken notwendige Schiebe-Klapp-Bewegung wird jedoch häufig als ruckartig und wenig definiert empfunden. Der Bedienkomfort ist bei dieser Lösung also nicht sehr hoch.

Weiterhin ist bekannt, Armlehnen zum Entriegeln anzuheben und anschließend ohne Drehbewegung nach unten zu drücken. Dies hat in der Regel jedoch zur Folge, dass die Sesselblende durch die Armlehne in der unteren Nichtgebrauchslage abgedeckt wird. Dadurch werden andere Bedienelemente am Sitz unzugänglich. Die US3550958 ist der nächstliegende Stand der Technik und zeigt eine Armlehne mit einem Armauflageschenkel, einem Befestigungsschenkel, einer Welle und einem Lagerbock. Die Aufgabe der vorliegenden Erfindung besteht somit darin, eine Armlehne vorzuschlagen, die intuitiv einfach und komfortabel von eine Gebrauchsstellung in eine Nichtgebrauchsstellung bewegbar ist, ohne jedoch in der Nichtgebrauchsstellung weitere Bedienelemente am Sitz zu verdecken.

Erfindungsgemäß wird diese Aufgabe gelöst durch eine Armlehne mit einem Armauflageschenkel, einem Lagerschenkel, an dessen einem Ende der Armauflageschenkel befestigt ist, und einem Befestigungsschenkel mit dem die Armlehne an einen Sitz montierbar ist, sowie einer Welle, die an dem freien Ende des Lagerschenkels befestigt ist und um die der Lagerschenkel einschließlich des Armauflageschenkels zwischen einer Nichtgebrauchsstellung und einer Zwischenstellung schwenkbar ist, und einem Lagerbock, in dem die Welle drehbar gelagert ist, und der um eine Achse im Wesentlichen senkrecht zu der Welle kippbar an dem Befestigungsschenkel gelagert ist, so dass der Lagerschenkel einschließlich des Armauflageschenkels zwischen der Zwischenstellung und einer Gebrauchsstellung kippbar ist, wobei die Welle im Wesentlichen parallel zu dem Armauflageschenkel verläuft.

In vorteilhafter Weise erlauben die eigens in dem Lagerbock realisierten Drehlager eine definierte Kipp-Schwenkbewegung der Armlehne. Außerdem kann dadurch eine robuste Lagerung für eine Bewegung in zwei Freiheitsgraden erzielt werden. Von besonderem Vorteil dabei ist, wenn die Lagerung als Festlager realisiert ist, so dass mit der Armlehne nur wohl definierte Bewegungen in zwei Freiheitsgraden ausführbar sind.

An dem freien Ende der Welle kann ein Verriegelungskopf angebracht sein, der für eine Arretierung der Schwenkbewegung in der Gebrauchsstellung sorgt. Insbesondere kann der Verriegelungskopf eine Feder und die Lagerung eine entsprechende Nut aufweisen. Hierdurch ist eine einfache und kostengünstige, aber auch robuste Arretierung gegen Schwenkbewegungen der Armlehne möglich.

Weiterhin kann der Verriegelungskopf gegenüber der Feder einen Nocken aufweisen, der in der Nichtgebrauchsstellung in die Nut einrastet. Dadurch bleibt die Armlehne auch in der Nichtgebrauchsstellung in einer vorgegebenen Position, kann aber leicht durch einfaches Schwenken aus der Nichtgebrauchsstellung herausgedreht werden, da der Lagerbock die für das Herausdrehen des Nockens notwendige Kippbewegung zulässt.

Erfindungsgemäß verläuft die Welle, an der die Armlehne schwenkbar gelagert ist, im Wesentlichen parallel zu dem Armauflageschenkel. Dadurch erfolgt die Schwenkbewegung von der Gebrauchsstellung in die Nichtgebrauchsstellung nach unten und wird durch die Schwerkraft unterstützt.

Vorzugsweise ist an dem Lagerbock und dem Befestigungsschenkel eine elastische Feder befestigt, so dass der Lagerschenkel einschließlich des Armauflageschenkels nur durch Überwinden der Kraft der elastischen Feder (von der Schwerkraft abgesehen) von der Gebrauchsstellung in die Zwischenstellung kippbar ist. Durch die elastische Feder wird die Armlehne in die Gebrauchsstellung gezogen bzw. geschoben, so dass verhindert werden kann, dass die Armlehne ungewollt durch Rütteln in die Zwischenstellung bewegt wird, in der sie verschwenkt werden kann. Die elastische Feder kann beispielsweise durch eine Zugfeder realisiert sein, was technisch einfach umgesetzt werden kann. Gleichermaßen können für die Sicherung der Armlehne in der Gebrauchsstellung aber auch Druckfedern, Spiralfedern und dergleichen eingesetzt werden.

Entsprechend einer speziellen Ausführungsform kann die Welle in dem Lagerbock mittels eines Gleitlagers gelagert sein. Ebenso kann der Lagerbock an dem Befestigungsschenkel mittels eines Gleitlagers gelagert sein. Die Gleitlager erweisen sich hinsichtlich Herstellungs- und Montagekosten als besonders günstig.

Die Kippbewegung des Lagerbocks lässt sich beispielsweise durch einen Arm begrenzen, der an einen Anschlag des Befestigungsschenkels bzw. des Festlagers anschlägt und an dem die Zugfeder bzw. die Sicherungsfeder zur Unterdrückung einer Kippbewegung angreift. Somit erhält der Arm an dem Lagerbock eine doppelte Funktionalität, nämlich die des Anschlags und die des Hebelarms.

Die vorliegende Erfindung wird nun anhand der beifügten Zeichnungen näher erläutert, in denen zeigen:
- Fig. 1: eine Seitenansicht einer erfindungsgemäßen Armlehne;
- Fig. 2: die Armlehne von Fig. 1 in der Vorderansicht;
- Fig. 3: eine vergrößerte Ansicht des Lagers der Armlehne von schräg hinten;

- Fig. 4: eine vergrößerte Ansicht des Lagers der Armlehne von schräg vorn;
- Fig. 5: eine Ansicht auf die Arretierungsvorrichtung in der Nichtgebrauchsstellung;
- Fig. 6: eine Ansicht auf die Arretierungsvorrichtung kurz vor Erreichen der Zwischenstellung;
- Fig. 7: eine Ansicht auf die Arretierungsvorrichtung in der Zwischenstellung und
- Fig. 8: eine Ansicht auf die Arretierungsvorrichtung in der Gebrauchsstellung.

Das nachfolgend näher geschilderte Ausführungsbeispiel stellt eine bevorzugte Ausführungsform der vorliegenden Erfindung dar.

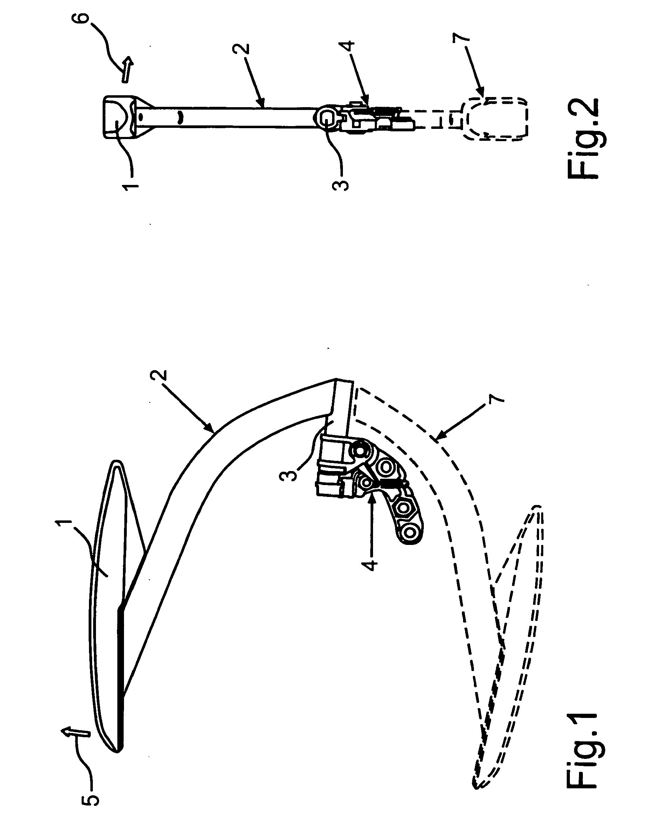

Die in Fig. 1 in der Seitenansicht wiedergegebene Armlehne besitzt einen Armauflageschenkel 1, der an ein Ende eines Lagerschenkels 2 befestigt ist. An dem anderen Ende des Lagerschenkels 2 ist eine Welle 3 befestigt, mit der der Lagerschenkel 2 einschließlich des Armauflageschenkels 1 in einem Lager 4 kipp-schwenkbar gelagert ist. Die Armlehne befindet sich so in einer oberen Stellung, d. h. einer Gebrauchsstellung, in der ein Arm auf den Armauflageschenkel aufgestützt werden kann.

Falls der Nutzer die Armlehne nicht benötigt, kann er sie in eine Nichtgebrauchsstellung bzw. eine untere Stellung bewegen. Hierzu hebt er die Armlehne bzw. den Armauflageschenkel 1 an der Vorderseite entsprechend der Anheberichtung 5 an. Dabei bewegt sich der Armauflageschenkel 1 zusammen mit dem Lagerschenkel 2 in eine Zwischenstellung. In dieser Zwischenstellung lässt sich der Lagerschenkel 2 einschließlich des Armauflageschenkels 1 um die Welle 3 im Lager 4 in einer Schwenkrichtung 6, die in der Rückseitenansicht der Armlehne in Fig. 2 dargestellt ist, in eine Nichtgebrauchsstellung nach unten schwenken. Die Nichtgebrauchsstellung ist sowohl in der Fig. 1 als in der Fig. 2 durch eine gestrichelte Kontur 7 von Lagerschenkel und Armauflageschenkel symbolisiert.

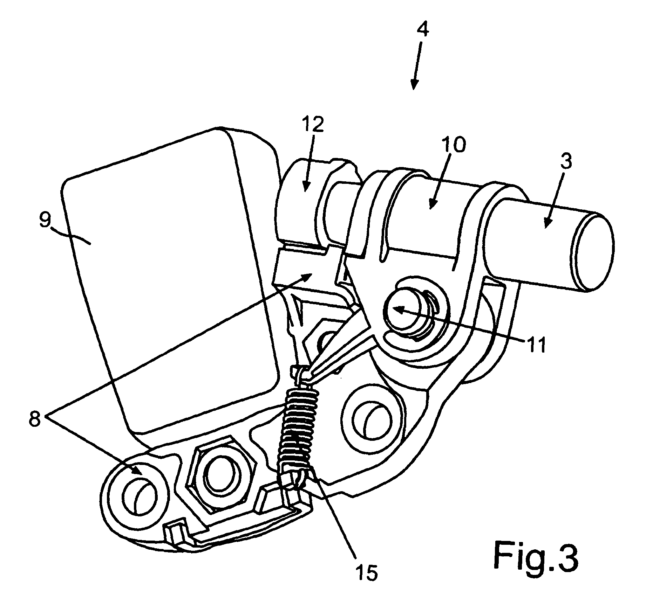

In Fig. 3 ist das Lager 4 in einer Ansicht schräg von vorne bezogen auf die gesamte Armlehne bzw. den Sitz, an den die Armlehne zu montieren ist, dargestellt. Im vorliegenden Fall handelt es sich um ein Festlager. Dieses weist einen Befestigungsschenkel 8 auf, mit dem es entsprechend dem vorliegenden Beispiel an einer Rückenlehne 9 (in Fig. 3 ist lediglich eine Blende bzw. ein Teilstück der Rückenlehne dargestellt) angeschraubt ist. Ein Lagerbock 10 ist mit Hilfe einer kurzen Welle bzw. eines Zapfens 11 an dem Befestigungsschenkel 8 kippbar gelagert. Senkrecht zu der Achse des Zapfens 11 ist in dem Lagerbock 10 die Welle 3 drehbar gelagert. Beide Lager, sowohl für die Kippbewegung an dem Zapfen 11 als auch für die Dreh- bzw. Schwenkbewegung der Welle 3, sind hier als Gleitlager ausgeführt. Sie können aber auch mit Kugellagern, Wälzlagern und dergleichen realisiert werden.

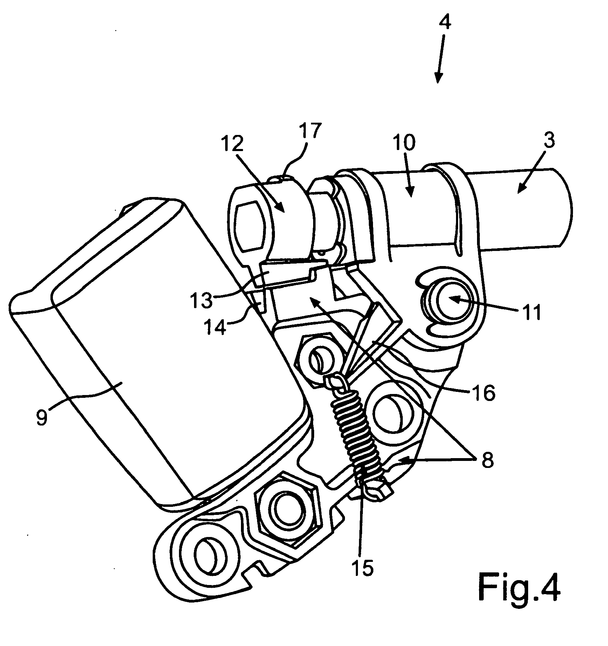

Am freien Ende der Welle 3 ist ein Verriegelungskopf 12 drehfest auf die Welle 3 aufgebracht. Dieser ist in Fig. 4 besser zu erkennen, die das Lager 4 von schräg vorne zeigt. Der Verriegelungskopf 12 dient zur Verriegelung bzw. Arretierung der Welle 3 in der Gebrauchsstellung (vgl. Fig. 1 und 2). Er bildet hierzu mit dem Befestigungsschenkel 8 eine Nut-Feder-Verbindung. Eine Feder 13 ist an dem Verriegelungskopf 12 parallel zur Achse der Welle 3 angeordnet. In dem Befestigungsschenkel 8 ist eine korrespondierende Nut 14 vorgesehen. Mit Hilfe einer Schraubenzugfeder 15, die einerseits an dem Befestigungsschenkel 8 und andererseits an einem Arm 16 des Lagerbocks 10 befestigt ist, wird auf den Lagerbock 10 ein Drehmoment um die Achse des Zapfens 10 ausgeübt, wodurch die Feder 13 in die Nut 14 gedrückt wird. Gegenüber der Feder 13 besitzt der Verriegelungskopf 12 einen Nocken 17, der in der Nichtgebrauchsstellung der Armlehne in die Nut 14 einrastet.

Nachfolgend wird die Funktionsweise der klapp- bzw. schwenkbaren Armlehne näher erläutert. Die Armlehne ist wie erwähnt vorzugsweise durch eine Nut-Feder-Verbindung zwischen dem Verriegelungskopf 12 an der Welle 3 und dem Befestigungsschenkel 8 bzw. dem Festlager gegen Verdrehen in der Gebrauchsstellung gesichert (vgl. Fig. 1 und 2). Die Zugfeder 15 stellt sicher, dass die Armlehne auch bei Erschütterungen immer fest fixiert bleibt. Durch die Zugkraft der Feder 15 wird der schwenkbare Lagerbock 10 über die Drehachse des Zapfens 11 immer nach unten gezogen, so dass die Nut-Feder-Verbindung zwischen dem Verriegelungskopf 12 und dem Befestigungsschenkel 8 immer in maximalem Eingriff steht.

Zum Schwenken in die Nichtgebrauchsstellung erfolgt die Entriegelung beim Anheben in der Richtung 5 durch ein Kippen des Lagerbocks 10 über die Drehachse des Zapfens 11 entgegen der Federkraft der Zugfeder 15. Der Verriegelungskopf 12 wird dabei mit seiner Feder 13 aus der Nut 14 des Festlagers bzw. Befestigungsschenkels 8 gehoben, so dass die seitliche Verriegelung und damit die Drehbewegung freigegeben ist. Nach dem Beginn der Drehbewegung kann der Fahrgast die Armlehne loslassen. Die Schwerkraft führt dann die Schwenkbewegung aus und die Feder 15 zieht den Lagerbock 10 mit Welle 3 und Verriegelungskopf 12 wieder in die ursprüngliche Lage nach unten, d. h. der Lagerbock wird zurückgekippt. Die Drehbewegung der Armlehne um ca. 180° endet, indem der Nocken 17 des Verriegelungskopfs 12 mit der Nut des Befestigungsschenkels 8 in Eingriff gerät und so eine weitere selbsttätige Drehung der Armlehne an dem Festlager gehemmt wird. Durch den Nocken wird somit ein ungewolltes Ausschwenken der Armlehne in Nichtgebrauchsstellung durch Schwingungen und Stöße verhindert.

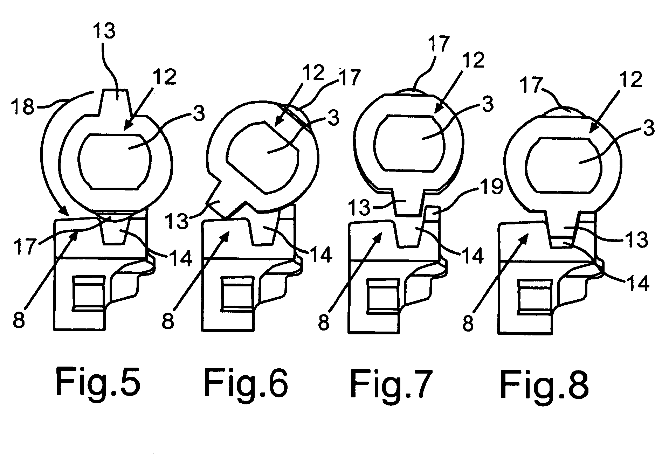

Das Rückstellen der Armlehne von der Nichtgebrauchsstellung in die Gebrauchsstellung wird nun nochmals detailliert anhand der Fig. 5 bis 8 näher erläutert, die eine Frontansicht (Ansicht X) bzw. Stirnseitenansicht der Welle 3 mit dem Verriegelungskopf 12 in den verschiedenen Stellungen zeigen. Ausgangspunkt ist das Einrasten des Nockens 17 des Verriegelungskopfs 12 in der Nut 14 des Festlagers bzw. des Befestigungsschenkels 8. Bei dem Zurückstellen in die Gebrauchslage erfolgt nun ein Drehen der Welle 3 mitsamt dem Verriegelungskopf 12 entsprechend der Drehrichtung 18. Dabei wird der Nocken 17 am Verrieglungskopf 12 aus der Nut 14 des Befestigungsschenkels 8 gedreht und der Lagerbock 10 automatisch etwas angehoben, da die Feder 13 am Verrieglungskopf 12 auf das Festlager bzw. den Befestigungsschenkel 8 aufläuft.

Die Drehung der Armlehne ist beendet, wenn die Feder 13 des Verriegelungskopfs 12 an einem Anschlag 19 des Befestigungsschenkels 8 anschlägt, wie dies in Fig. 7 dargestellt ist. Nach dem Anschlagen wird die Feder 13 des Verriegelungskopfs 12 in die Nut 14 des Festlagers bzw. Befestigungsschenkels 8 mittels der Feder 15 gezogen. Diese Endlage entspricht der hochgeklappten Armlehne in Gebrauchsstellung.

Mit Hilfe der erfindungsgemäßen Lagerung kann eine intuitive Betätigung der Armlehne durch Anheben nach oben zum Entriegeln und Abklappen um eine Achse ohne ruckartige Übergänge oder Bewegungen erfolgen. Vorteilhaft ist weiterhin, dass durch das Abklappen der Armlehne die Armlehne in Nichtgebrauchslage unter der Sesselblende zu liegen kommt und die ganze obere Sesselblende für dort befindliche Bedienelemente frei zugänglich ist. Es bleiben dadurch also die dort liegenden Bedienelemente für z. B. Rückenlehnenverstellung, Querverstellung der Sitze und ein Tonmudul, frei einsehbar.

## Patentansprüche

1. Armlehne mit
- einem Armauflageschenkel (1),
- einem Lagerschenkel (2), an dessen einem Ende der Armauflageschenkel (1) befestigt ist,
- einem Befestigungsschenkel (8) mit dem die Armlehne an einen Sitz montierbar ist, und
- einer Welle (3), die an dem freien Ende des Lagerschenkels (2) befestigt ist und um die der Lagerschenkel (2) einschließlich des Armauflageschenkels (1) zwischen einer Nichtgebrauchsstellung und einer Zwischenstellung schwenkbar ist,
- einem Lagerbock (10), in dem die Welle (3) drehbar gelagert ist, und der um eine Achse im Wesentlichen senkrecht zu der Welle (3) kippbar an dem Befestigungsschenkel (8) gelagert ist, so dass der Lagerschenkel (2) einschließlich des Armauflageschenkels (1) zwischen der Zwischenstellung und einer Gebrauchsstellung kippbar ist, und
- die Welle (3) im Wesentlichen parallel zu dem Armauflageschenkel (1) verläuft.

2. Armlehne nach Anspruch 1,
**dadurch gekennzeichnet, dass**
an einem freien Ende der Welle (3) ein Verriegelungskopf (12) angebracht ist, der für die Arretierung in der Gebrauchsstellung sorgt.

3. Armlehne nach Anspruch 2,
**dadurch gekennzeichnet, dass**
der Verriegelungskopf (12) eine Feder (13) und der Befestigungsschenkel (8) eine entsprechende Nut (14) aufweist.

4. Armlehne nach Anspruch 3,
**dadurch gekennzeichnet, dass**
der Verriegelungskopf (12) gegenüber der Feder (13) einen Nocken (17) aufweist, der in der Nichtgebrauchsstellung in die Nut (14) einrastet.

5. Armlehne nach einem der vorhergehenden Ansprüche,
**dadurch gekennzeichnet, dass**
an dem Lagerbock (10) und dem Befestigungsschenkel (8) eine elastische Feder (15) befestigt ist, so dass der Lagerschenkel (2) einschließlich des Armauflageschenkels (1) nur durch Überwinden der Kraft der elastischen Feder (15) von der Gebrauchsstellung in die Zwischenstellung kippbar ist.

6. Armlehne nach Anspruch 5,
**dadurch gekennzeichnet, dass**
die elastische Feder (15) eine Zugfeder ist.

7. Armlehne nach einem der vorhergehenden Ansprüche,
**dadurch gekennzeichnet, dass**
die Welle (3) in dem Lagerbock (10) mittels eines Gleitlagers gelagert ist.

8. Armlehne nach einem der vorhergehenden Ansprüche,
**dadurch gekennzeichnet, dass**
der Lagerbock (10) an dem Befestigungsschenkel (8) mittels eines Gleitlagers gelagert ist.

9. Armlehne nach Anspruch 6,
**dadurch gekennzeichnet, dass**
die Kippbewegung des Lagerbocks (10) durch einen Arm (16) begrenzt ist, der an einen Anschlag des Befestigungsschenkels (8) anschlägt und an den die Zugfeder (15) angreift.

## Claims

1. Armrest, comprising
- an arm support leg (1),
- a bearing leg (2), to one end of which the arm support leg (1) is secured,
- a mounting leg (8), with which the arm rest can be mounted on a seat,
and
- a shaft (3), which is secured to the free end of the bearing leg (2) and about which the bearing leg (2) including the arm support leg (1) can be pivoted between an inoperative position and an intermediate position,
- a bearing block (10), in which the shaft (3) is rotatably mounted and which is mounted on the mounting leg (8) for tilting about an axis substantially perpendicular to the shaft (3), so that the bearing leg (2) including the arm support leg (1) can be pivoted between the intermediate position and an operative position, and
- the shaft (3) extends substantially parallel to the arm support leg (1).

2. Armrest according to claim 1,
**characterised in that**
a locking button (12) responsible for locking the armrest in the operative position is fitted to a free end of the shaft (3).

3. Armrest according to claim 2,
**characterised in that**
the locking button (12) has a tongue (13) and the mounting leg (8) has a matching groove (14).

4. Armrest according to claim 3,
**characterised in that**
the locking button (12) has a cam (17) opposite the tongue (13), which cam (17) latches into the groove (14).

5. Armrest according to any of the preceding claims,
**characterised in that**
an elastic spring (15) is mounted on the bearing block (10) and the mounting leg (8), so that the bearing leg (2) including the arm support leg (1) can only be tilted from the operative position into the intermediate position by overcoming the force of the elastic spring (15).

6. Armrest according to claim 5,
**characterised in that**
the elastic spring (15) is a tension spring.

7. Armrest according to any of the preceding claims,
**characterised in that**
the shaft (3) is mounted in the bearing block (10) by means of a plain bearing.

8. Armrest according to any of the preceding claims,
**characterised in that**
the bearing block (10) is mounted on the mounting leg (8) by means of a plain bearing.

9. Armrest according to claim 6,
**characterised in that**
the tilting movement of the bearing block (10) is limited by an arm (16), which hits a stop of the mounting leg (8) and on which the tension spring (15) acts.

## Revendications

1. Accoudoir comportant
- une branche repose-bras (1),
- une branche-pivot (2) qui est fixée à une extrémité de la branche repose-bras (1),
- une branche de fixation (8) avec laquelle l'accoudoir peut être monté sur un siège, et
- un arbre (3) qui est fixé à l'extrémité libre de la branche-pivot (2) et autour duquel la branche-pivot (2) y compris la branche repose-bras (1) peut pivoter entre une position de non-utilisation et une position intermédiaire,
- l'arbre (3) est monté rotatif dans un sabot d'appui (10) qui est monté basculant sur la branche de fixation (8) autour d'un axe sensiblement perpendiculairement à l'arbre (3), de manière telle que la branche-pivot (2) y compris la branche repose-bras (1) peut être basculée entre la position intermédiaire et une position d'utilisation, et
- l'arbre (3) s'étend sensiblement parallèlement à la branche repose-bras (1).

2. Accoudoir selon la revendication 1, **caractérisé en ce qu'**à une extrémité libre de l'arbre (3) est montée une tête de verrouillage (12) qui sert au blocage dans la position d'utilisation.

3. Accoudoir selon la revendication 2, **caractérisé en ce que** la tête de verrouillage (12) présente une languette (13) et la branche de fixation (8) une rainure (14) correspondante.

4. Accoudoir selon la revendication 3, **caractérisé en ce que** la tête de verrouillage (12) présente en regard de la languette (13) un ergot (17) qui s'engage dans la rainure dans la position de non-utilisation.

5. Accoudoir selon l'une quelconque des revendications précédentes, **caractérisé en ce que** sur le sabot d'appui (10) et la branche de fixation (8) est fixé un ressort élastique (15) de telle manière que la branche-pivot (2) y compris la branche repose-bras (1) peut basculer de la position d'utilisation à la position intermédiaire uniquement lorsque la force du ressort élastique est surmontée.

6. Accoudoir selon la revendication 5, **caractérisé en ce que** le ressort élastique (15) est un ressort de traction.

7. Accoudoir selon l'une quelconque des revendications précédentes, **caractérisé en ce que** l'arbre (3) est monté au moyen d'un palier lisse dans le sabot d'appui (10).

8. Accoudoir selon l'une quelconque des revendications précédentes, **caractérisé en ce que** le sabot d'appui (10) est monté au moyen d'un palier lisse sur la branche de fixation (8).

9. Accoudoir selon la revendication 6, **caractérisé en ce que** le mouvement de basculement du sabot d'appui (10) est limité par un bras (16) qui frappe une butée du bras de fixation (8) et sur lesquels agit le ressort de tension.
